# EUROPEAN PATENT APPLICATION

(11) **EP 2 345 968 A1**
(43) Date of publication of application: **20.07.2011**
(21) Application number: 10150666.5
(22) Date of filing: 13.01.2010
(51) Int. Cl.: G06F 15/78, H03K 19/177

(54) **Method and apparatus for reconfiguring a reconfigurable device**

(71) Applicant: Panasonic Corporation, Kadoma-shi Osaka 571-0051 (JP)
(72) Inventor: Stansfield, Tony, Bristol BS1 6EA (GB)
(74) Representative: Haley, Stephen

(57) **Abstract**

A method of configuring at least one application-specific functional block embedded in a user programmable fabric, the user programmable fabric comprising configuration data control means having inputs and outputs and the application-specific functional blocks comprising configuration control means having data inputs and address inputs. The method comprises the steps of sending configuration data and address data to the configuration data control means of the user programmable fabric, the configuration data and address data being arranged to configure the at least one application-specific functional block and routing at least one output of the configuration data control means of the user programmable fabric to at least one address input of the configuration control means of the at least one application-specific functional block. The method also comprises the steps of routing at least one output of the configuration data control means of the user programmable fabric to at least one data input of the configuration control means of the at least one application-specific functional block, transferring the configuration data and the address data to the at least one data input and the at least one address input, respectively, of the configuration control means of the at least one application-specific functional block and configuring, using both the configuration data and address data, the at least one application-specific functional block.

## Description

The present invention relates to the field of user programmable logic devices. More specifically, the present invention is directed to a method of configuring application-specific functional blocks which are embedded in a user programmable fabric.

Reconfigurable devices/fabrics, such as D-Fabrix (disclosed in, for example, US6353841, US6252792, US2002/0157066) are commonly made up of multiple instances of a single user programmable logic block or tile; the fundamental building block of the system. This arrangement facilitates the use of an easily scalable configuration mechanism of equally regular structure.

The insertion of application-specific functional blocks embedded within the reconfigurable device/fabric is often used to enhance the performance of the device/fabric within specific application contexts. The addition of these application-specific functional blocks complicates the reconfiguration scheme requiring modification to the configuration mechanism and the interface it provides.

In order to provide a solution to the above problems, prior art devices have been developed which have fixed-functionality application-specific functional blocks. Fixing the functionality of these blocks removes the need to provide any form of configuration mechanism. However, although this solution requires no extra configuration by the user to initialise the embedded application functional blocks, it also reduces the flexibility and re-usability of the reconfigurable device/fabric.

Another solution which has been put forth in prior art devices is the provision of a separate dedicated configuration mechanism for the embedded application-specific functional blocks. This solution requires an additional, separate and sometimes significantly different, interface to be provided by the re-configuration device/fabric. Moreover, this solution has the added disadvantage of requiring a separate configuration protocol within the configuration control block in order to perform the configuration of the embedded application-specific functional blocks. Accordingly, the extra logic required to create the extra, dedicated configuration path incurs added design and manufacturing costs.

In order to alleviate the need for added, dedicated configuration logic, another solution has been developed which sees the user programmable section of the device/fabric reconfigured to act in full or in part as a configuration mechanism for the embedded application-specific functional blocks. Then, once the embedded application-specific functional blocks are configured, the user programmable section is re-configured as required by the application. Although this solution solves the problem of having to add dedicated configuration circuitry, it also comes with an inherent configuration time penalty, as it requires the user programmable logic to be re-configured twice each time an application is to be programmed onto the array.

Other prior art systems allow a refinement of the above solution by providing the user programmable section of the device/fabric with a default configuration that would provide, in full or in part, a configuration mechanism for the embedded application-specific functional blocks. Once the embedded application-specific functional blocks are configured, the user programmable section is then re-configured as required by the application. Although the default configuration may be activated from within the re-configurable device/fabric (on power-up as a default state or in response to external control) this solution also requires, in effect, a double configuration of the user programmable logic.

Thus, there exists a clear need for an improved flexible method of configuring embedded application-specific functional blocks without adding to the complexity of existing circuitry.

In order to solve the problems associated with the prior art, the present invention provides a method of configuring at least one application-specific functional block embedded in a user programmable fabric, the user programmable fabric comprising configuration data control means having inputs and outputs and the application-specific functional blocks comprising configuration control means having data inputs and address inputs, the method comprises the steps of:
sending configuration data and address data to the configuration data control means of the user programmable fabric, the configuration data and address data being arranged to configure the at least one application-specific functional block;
routing at least one output of the configuration data control means of the user programmable fabric to at least one address input of the configuration control means of the at least one application-specific functional block;
routing at least one output of the configuration data control means of the user programmable fabric to at least one data input of the configuration control means of the at least one application-specific functional block;
transferring the configuration data and the address data to the at least one data input and the at least one address input, respectively, of the configuration control means of the at least one application-specific functional block; and
configuring, using both the configuration data and address data, the at least one application-specific functional block.

Preferably, the configuration data control means of the user programmable fabric comprises a chain of shift registers, the output of each shift register being connected to both the input of the next shift register in the chain and to either an address input of the at least one application-specific functional block or a data input of the at least one application-specific functional block, and the step of sending the configuration data and the address data further comprising the step of:
shifting the configuration data and the address data through the chain of shift registers.

Preferably, the application-specific functional blocks are of at least two types, each type of block being arranged to have address and data inputs/outputs at different positions on the application-specific functional block.

The present invention also provides an apparatus for configuring at least one application-specific functional block embedded in a user programmable fabric, the user programmable fabric comprising configuration data control means having inputs and outputs and the application-specific functional blocks comprising configuration control means having data inputs and address inputs, the apparatus comprises:
sending means for sending configuration data and address data to the configuration data control means of the user programmable fabric, the configuration data and address data being arranged to configure the at least one application-specific functional block;
routing means for routing at least one output of the configuration data control means of the user programmable fabric to at least one address input of the at least one application-specific functional block;
routing means for routing at least one output of the configuration data control means of the user programmable fabric to at least one data input of the configuration control means of the at least one application-specific functional block;
transferring means for transferring the configuration data and the address data to the configuration control means of the at least one application-specific functional block; and
configuring means for configuring, using both the configuration data and address data, the at least one application-specific functional block.

Preferably, the configuration data control means of the user programmable fabric further comprises:
a chain of shift registers, the output of each shift register being connected to both the input of the next shift register in the chain and to either an address input of the at least one application-specific functional block or a data input of the at least one application-specific functional block.

Preferably, the application-specific functional blocks are of different types, having address and data inputs/outputs at different positions.

The present invention also provides a reconfigurable logic device which comprises the above apparatus.

As will be appreciated, the present invention provides several advantages over the prior art. For example, a single design of interface can be used with multiple different arrays. This saves development time and costs when creating this interface. Moreover, the designer of the reconfigurable array can easily add (or subtract) new types of complex processing elements to the array without having to consider how they will be configured or having to modify the format of the data that is provided to the interface in order to configure the array. This will further decrease development time and costs.

As will also be appreciated, the present invention is particularly advantageous in instances where it is desirable to embed several different types of application specific functional blocks. This is significantly important when physically tailoring reconfigurable devices for different specific applications.

An example of the present invention will now be described with reference to the accompanying drawings, in which:
Figure 1 shows a diagram representing a programmable logic device in accordance with the prior art;
Figure 2 shows a diagram representing a programmable logic device comprising an embedded application-specific functional block in accordance with the prior art;
Figure 3 shows a diagram representing a programmable logic device in accordance with the present invention;
Figure 4 shows a diagram representing the configuration chain of a device according to the present invention;
Figure 5 shows a diagram representing the configuration chain of a device in accordance with the prior art;
Figure 6 shows a diagram representing the configuration chain of a device in accordance with one embodiment of the present invention;
Figure 7 shows a diagram representing the configuration chain of a device in accordance with another embodiment of the present invention;
Figure 8 shows a diagram representing the configuration chain of a device in accordance with another embodiment of the present invention;
Figure 9 shows a diagram representing the configuration chain of a device in accordance with another embodiment of the present invention;
Figure 10 shows a diagram representing the configuration chain of a device in accordance with another embodiment of the present invention; and
Figure 11 shows a diagram representing the configuration chain of a device in accordance with another embodiment of the present invention.

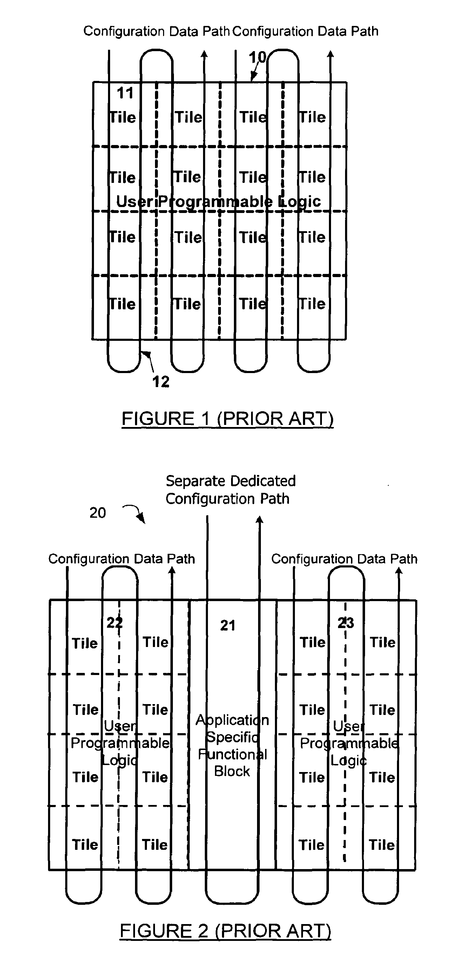

Figure 1 shows a diagram representing a programmable logic device 10 which is made of a plurality of tiles 11. Each tile 11 contains a plurality of configuration registers (not shown) which are linked by a configuration data path 12.

Figure 2 shows a diagram representing a device 20 according to the prior art. The centre portion of the diagram represents an application-specific functional block 31. On either side of the application-specific functional block 31 are sections of user programmable logic 22, 23. Each section of user programmable logic 22, 23 is made up of an array of tiles, as is the case in the device of Figure 1. As can be seen from Figure 2, the configuration data path of the programmable logic sections 22, 23 are completely separate from the configuration path of the application-specific functional block 31. This dedicated configuration path adds to the overall complexity of the device 20.

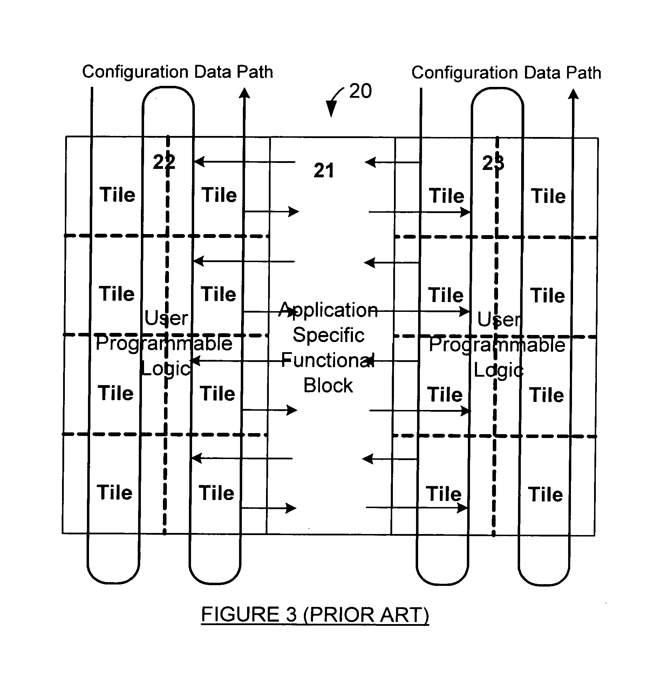

Figure 3 shows a device 20 in accordance with one example of the prior art. Again, the centre portion of the diagram represents an application-specific functional block 31 and, on either side of the block 31 are user programmable logic blocks 22, 23. However, although the user programmable logic blocks 22, 23 each have their own configuration data paths, the application-specific functional block 31 is configured using the programmable logic block data paths.

In order to configure and re-configure an embedded application-specific functional block within a re-configurable device/fabric, the existing configuration mechanism used for the user programmable logic section is reused in a different way. This provides a common interface to both which is independent of the number, location or type of embedded application-specific functional blocks.

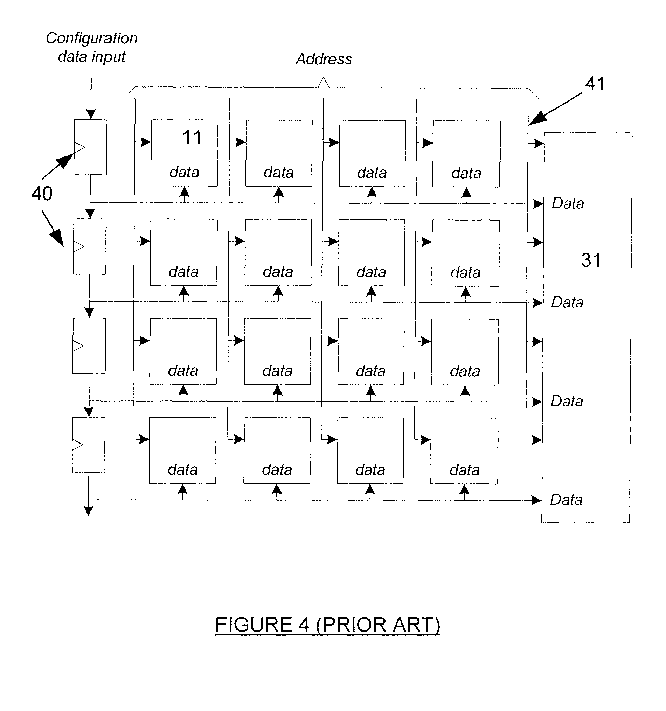

Figure 4 shows a user programmable logic block comprising an internal register chain which uses dedicated configuration wires or wires which form part of the general routing network of the re-configurable device/fabric. In operation, configuration data is shifted along the chains 40 until each register on the chain contains data. As shown in Figure 4, in order for the configuration data to be sent to specific areas of the application-specific functional block 31, a dedicated address line 41 must be used to transmit address information to application-specific functional block 31.

The use of such a dedicated address line 41 is a simple an effective method of sending address information to a single application-specific functional block 31. Also, when a plurality of identical application-specific functional blocks 31 are to be embedded and configured in the same way, the dedicated address line 41 can broadcast identical address information to each one. However, because the address information will be broadcast to all application-specific functional blocks 31 in row, a problem arises when a plurality of application-specific functional blocks 31 are to be configured with different configurations (i.e. configurations which require the configuration data to be written to different areas in each application-specific functional block 31).

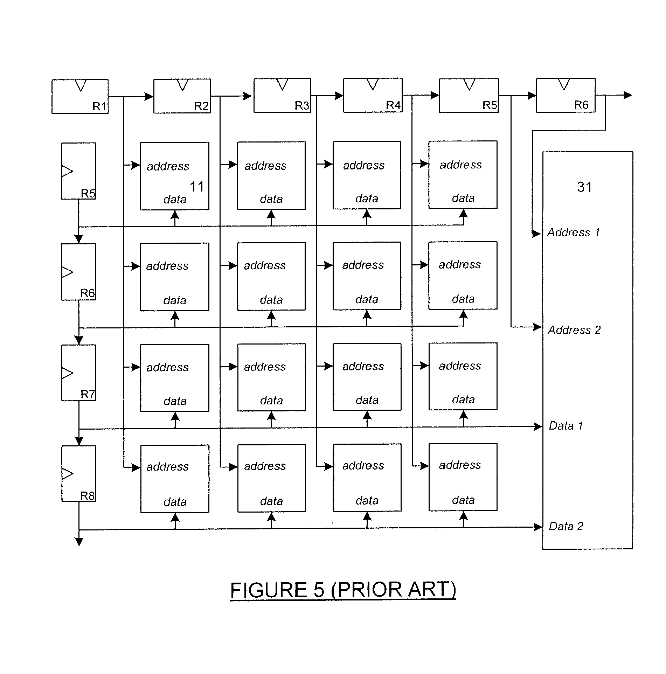

To partially overcome this problem, devices in accordance with Figure 5 have been developed. In these prior art devices, a user programmable logic block comprising both an internal data register chain and an internal address register chain, both of which use dedicated configuration wires or wires which form part of the general routing network of the re-configurable device/fabric.

In this embodiment, the address chain of the re-configurable device/fabric is used to route configuration address information to the address inputs of the application-specific functional block. As can be seen from Figure 5, the output of register R6 can be sent to input Address 2 of the application-specific functional block and the output of register R5 can be sent to input Address 1 of the application specific functional block.

Also in this embodiment, the data chain of the re-configurable device/fabric is used to route data to the data inputs of the application-specific functional block. As can also be seen from Figure 5, the output of register R7 can be sent to input Data 1 of the application-specific functional block and the output of register R8 can be sent to input Data 2 of the application-specific functional block.

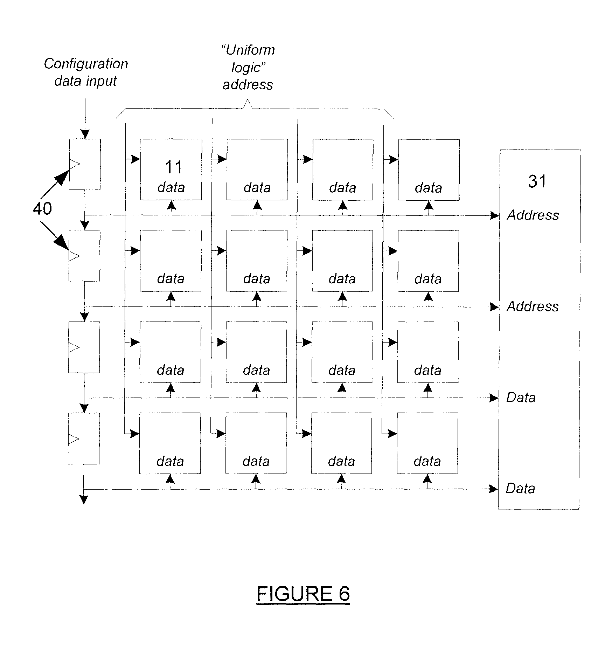

Now, with reference to Figure 6 to 11, different embodiments of the present invention will now be described. To solve the above problems, the present invention relies on the configuration chain to transmit address information to the application-specific functional block, as opposed to the dedicated broadcast address line 41. Accordingly, each embedded application-specific functional block 31 takes all or part of its configuration address from a subset of the configuration data loaded into the registers, and takes the data to write to that address from a different subset.

As is clear from Figure 6, the present invention loads both configuration data and address data in the shift register chain 40.

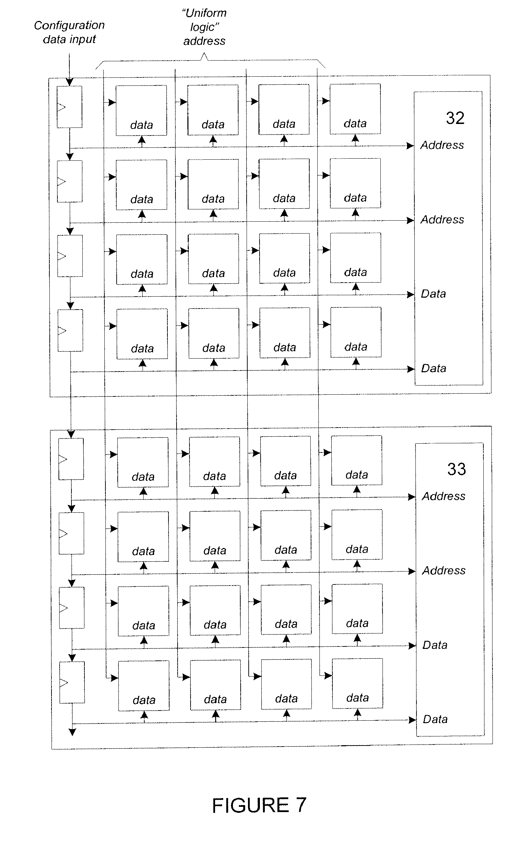

Figure 7 shows another example of the present invention, where a larger array is constructed. As will be appreciated, a column of application specific functional blocks in the array can comprise several different functional blocks. In the example shown in Figure 7, application specific functional block 32 and application specific functional block 33 are of the same type, insofar as their address inputs and data inputs are in the same positions.

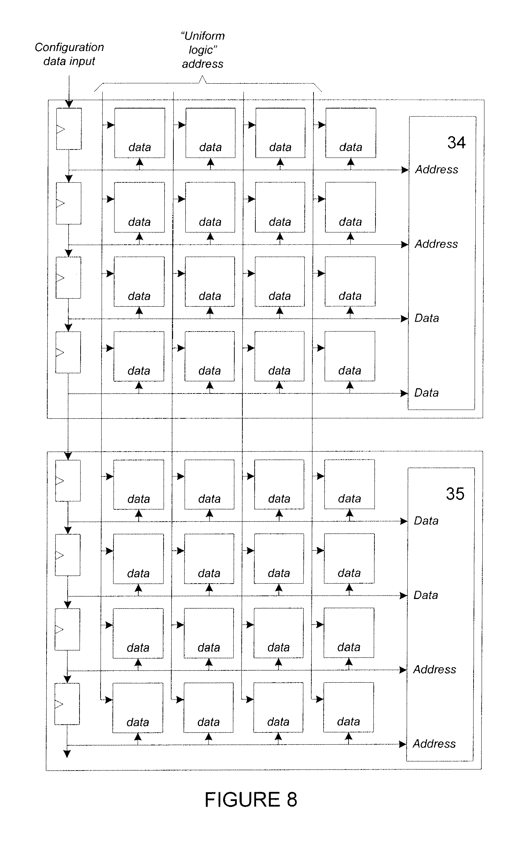

Figure 8 shows another example of the present invention, where a larger array is constructed. In the example of Figure 8, application specific functional block 34 and application specific functional block 35 are of different, insofar as their address inputs and data inputs are in different locations. Figure 8 shows the flexibility of the present invention, as each individual input of each individual application specific functional block can be sent different data.

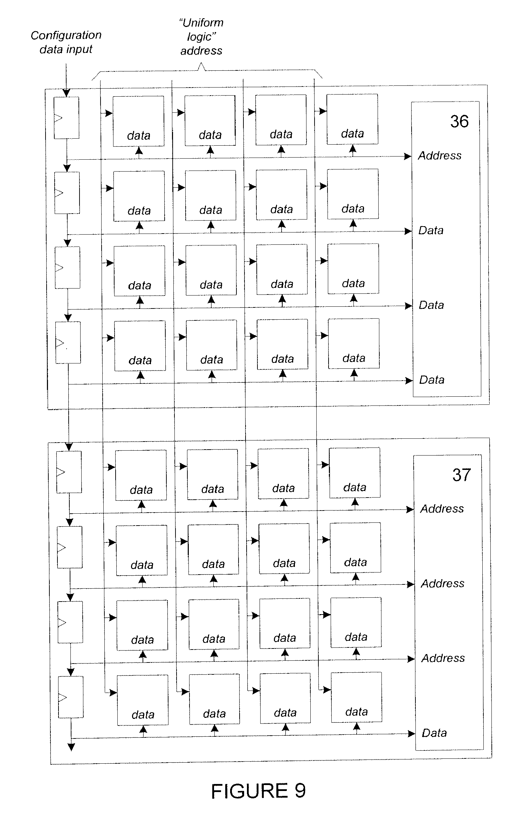

Figure 9 shows a further example of the present invention, where application specific functional block 36 and application-specific functional block 37 have different numbers of address and data inputs. Although the majority of current reconfigurable devices do not support situations which columns which contain several type of functional units, certain emerging technologies have begun to use such arrangement. Accordingly, the present invention will be particularly well suited to technologies which permit the presence of several types of functional block in a single column.

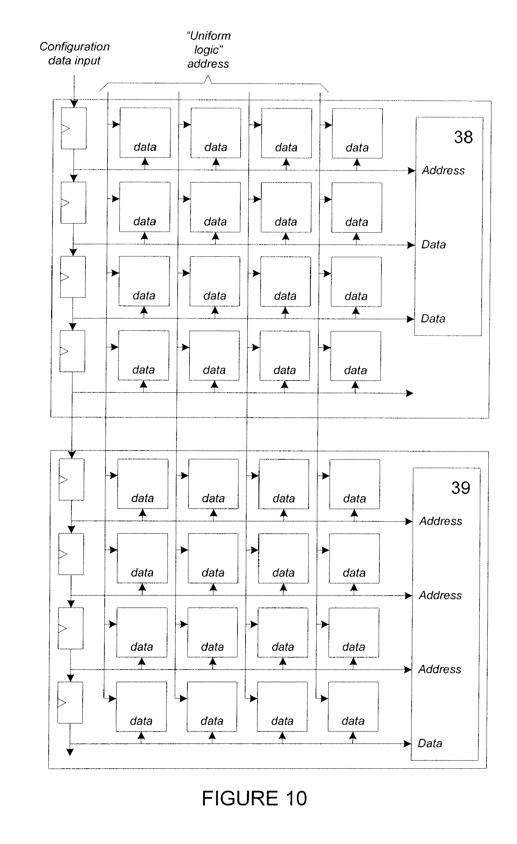

Figure 10 shows yet another example of the present invention, where application specific functional block 38 and application-specific functional block 39 have different numbers of address and data inputs, and where one input of application-specific functional block 38 is not used.

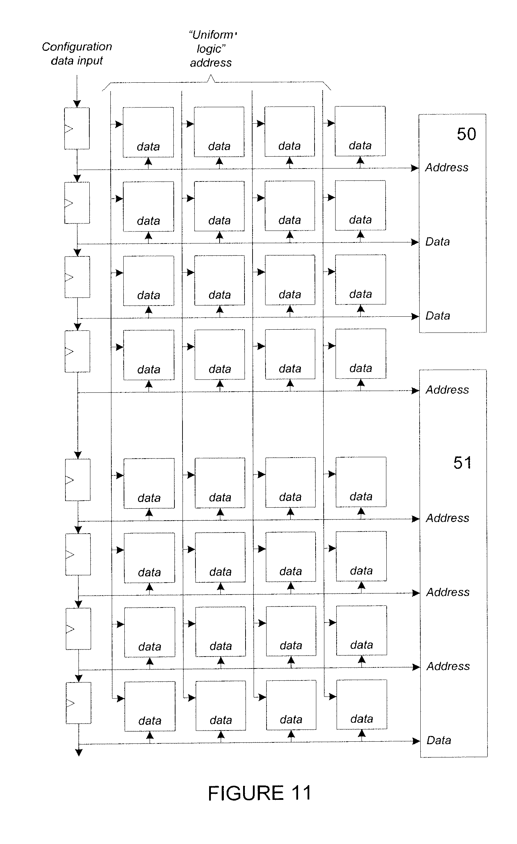

Finally, Figure 11 shows another example of the present invention, where application-specific functional block 50 is of a different size to that of application-specific functional block 51. This example shows how the present invention provides a solution in which the partitioning of the array can be mismatched with the inputs of the application-specific functional blocks 50 and 51. Thus, the configuration signals are simply a resource that can be connected to the application-specific functional blocks in whatever order is appropriate.

As will be appreciated by the example outlined above, one significant advantage of the present invention is that different addresses can be accessed in different application-specific functional blocks using a single configuration step. Accordingly, this allows rapid configuration of an array containing a plurality of application-specific functional blocks of different types (i.e. requiring different address information).

Moreover, the configuration of the memory in the tiles and the configuration of the application-specific functional blocks are achieved by loading data into the same shift register chain. Accordingly, the configuration interface of the reconfigurable device does not need to distinguish between data related to tiles and data related to application-specific functional blocks. This will significantly reduce the design complexity of the programming interface.

## Claims

1. A method of configuring at least one application-specific functional block embedded in a user programmable fabric, the user programmable fabric comprising configuration data control means having inputs and outputs and the application-specific functional blocks comprising configuration control means having data inputs and address inputs, the method comprising the steps of:
sending configuration data and address data to the configuration data control means of the user programmable fabric, the configuration data and address data being arranged to configure the at least one application-specific functional block;
routing at least one output of the configuration data control means of the user programmable fabric to at least one address input of the configuration control means of the at least one application-specific functional block;
routing at least one output of the configuration data control means of the user programmable fabric to at least one data input of the configuration control means of the at least one application-specific functional block;
transferring the configuration data and the address data to the at least one data input and the at least one address input, respectively, of the configuration control means of the at least one application-specific functional block; and
configuring, using both the configuration data and address data, the at least one application-specific functional block.

2. The method of claim 1, wherein the configuration data control means of the user programmable fabric comprises a chain of shift registers, the output of each shift register being connected to both the input of the next shift register in the chain and to either an address input of the at least one application-specific functional block or a data input of the at least one application-specific functional block, and the step of sending the configuration data and the address data further comprising the step of:
shifting the configuration data and the address data through the chain of shift registers.

3. The method of any of the proceeding claims, wherein the application-specific functional blocks are of at least two types, each type of block being arranged to have address and data inputs/outputs at different positions on the application-specific functional block.

4. An apparatus for configuring at least one application-specific functional block embedded in a user programmable fabric, the user programmable fabric comprising configuration data control means having inputs and outputs and the application-specific functional blocks comprising configuration control means having data inputs and address inputs, the apparatus comprising:
sending means for sending configuration data and address data to the configuration data control means of the user programmable fabric, the configuration data and address data being arranged to configure the at least one application-specific functional block;
routing means for routing at least one output of the configuration data control means of the user programmable fabric to at least one address input of the at least one application-specific functional block;
routing means for routing at least one output of the configuration data control means of the user programmable fabric to at least one data input of the configuration control means of the at least one application-specific functional block;
transferring means for transferring the configuration data and the address data to the configuration control means of the at least one application-specific functional block; and
configuring means for configuring, using both the configuration data and address data, the at least one application-specific functional block.

5. The apparatus of claim 4, wherein the configuration data control means of the user programmable fabric further comprising:
a chain of shift registers, the output of each shift register being connected to both the input of the next shift register in the chain and to either an address input of the at least one application-specific functional block or a data input of the at least one application-specific functional block.

6. The apparatus of any of claims 4 or 5, wherein the application-specific functional blocks are of different types, having address and data inputs/outputs at different positions.

7. A reconfigurable logic device comprising an apparatus in accordance with any of claims 4 to 6.
